# EUROPEAN PATENT SPECIFICATION

(11) **EP 2 439 174 B1**
(45) Date of publication and mention of the grant of the patent: **27.04.2016**
(21) Application number: 11183339.8
(22) Date of filing: 29.09.2011
(51) Int. Cl.: C02F 1/00, C02F 1/50, C02F 1/02, E03B 7/09, F24D 17/00

(54) **Flow device for anti-legionnaires' disease sanitization of branch lines and terminal apparatuses of water systems**
Flussvorrichtung gegen die Legionärskrankheitsdesinfizierung von Abzweigleitungen und Endgeräte von Wassersystemen
Dispositif d'écoulement pour assainissement contre la légionellose des branchements et appareils de terminaux des systèmes d'eau

(30) Priority: 07.10.2010 IT MC20100099
(43) Date of publication of application: 11.04.2012
(73) Proprietor: Soema Srl, 62019 Recanati (MC) (IT)
(72) Inventor: Fava, Enzo, 62019 RECANATI (MC) (IT); Manfredini, Giuseppe, 62019 RECANATI (MC) (IT)
(74) Representative: Baldi, Claudio

(56) References cited:
- US-A1- 2006 283 789

## Description

The present patent application for industrial invention relates to a flow device for "anti-legionnaires' disease" sanitization of branch lines and terminal apparatuses of water systems.

To better understand the problem intended to be solved by the present invention, it is essential to illustrate the structural configuration and operation modes of the current models of "anti-legionnaires' disease" sanitization systems, which are normally installed in hospitals, clinics, nursing homes, and in all buildings designed to host people who are more subject than others to contracting legionnaires' infections.

In order to properly sanitize hot domestic water installations and eliminate biofilm, a consolidated method consists in:
- implementation of main line of hot water installation with auxiliary recirculation line, which allows for having a loop system wherein a pump creates continuous water circulation and inserting in the main line of a sanitizing chemical agent or boiling water, which is pushed by the pump and continuously circulates in the loop eliminating bacteria in water and attacking biofilm;
- fluxing through terminal apparatuses, such as faucets, shower heads, and any other type of water delivering nozzles.

The term "fluxing" indicates the delivery of a certain amount of water for a predefined time through said terminal apparatuses of the water system, in such a way to discharge contaminated stagnant water with inactive sanitizing agent , both in terminal apparatuses and branch pipes coming from the main line.

It has been largely documented that effective fluxing is necessary to obtain a satisfactory sanitization action.

While the adoption of said auxiliary recirculation line allows for providing continuous or cyclic sanitization of the main line of the water system in a simple, automatic way, sanitization of branch lines and terminal apparatuses requires the manual operation of an operator to open the faucets installed at the end of said branch lines to make water with sanitizer flow through said branch lines, coming out from the terminal faucets.

For illustrative purposes only, reference is made to the anti-legionnaires' sanitization treatment that is currently carried out in hospitals on a periodical basis.

The person responsible for such a treatment must inform patients in hospital rooms not to use the bathroom during the sanitization period.

After introducing water with disinfecting agent (or boiling water) into the main line of the water system, the operator must go to a limited number of bathrooms and open the faucets, it being impossible to simultaneously open all faucets and showers of a specific ward.

After a few tens of minutes, the operator must return to the same rooms and close the bathroom faucets. Then, he goes to another number of rooms, where the same procedure is repeated until the operation has been completed in all bathrooms of the ward.

Such a method of operation is impaired by a series of problems and inconveniences.

Firstly, one problems refers to patients' privacy and discomfort.

Additionally, given the fact that disinfections must be carried out in periods when water consumption in hospital is minimized, patients are always troubled in night hours.

Finally, in view of the fact that the operator is usually a plumber, who pays little attention to the hygienic rules to be complied with to protect hospital patients, there is a risk of infections caused by the visit of said operator in the hospital.

As a matter of fact, some hospitals have recorded a significantly increased number of nosocomial infections after disinfection of water systems.

In addition to the aforementioned drawbacks, attention is drawn on the fact that in such a method of operation, no feedback is available to make sure that fluxing has been regularly and efficaciously carried out. US2006/0283789 discloses a a loop system for pools and spas in order to sanitizing all the bodies inserted in series along the loop. A sanitizer generator adds sanitizer to the water circulating into the loop. A control controls the opening of electrovalves for injection of sanitizer and driving of a recirculation pump for recirculation of the sanitizer into the loop.

The purpose of the present invention is to devise a flow device that allows for carrying out anti-legionnaires' sanitization of terminal apparatuses of water systems in a completely automatic way, without requiring the presence of an operator in the building where the water system being sanitized is installed.

Another purpose of the present invention is to devise a flow device that is simple to make and easy to install.

A further purpose of the present invention is to devise a flow device that can be programmed in such a way to carry out fluxing cycles with different length and at different time intervals according to the specific requirements or preferences.

Another purpose of the present invention is to devise a flow device able to save and record all identification data of the operation mode of all sanitization cycles.

These purposes have been achieved by the flow device of the invention, the main characteristics of which are precisely defined in the first claim of the attached set of claims, whereas the dependent claims describe the secondary characteristics of the invention.

The flow device of the invention comprises
- an electrovalve adapted to be installed in such a way that, in open condition, water contained in the branch line of the water system is conveyed towards the drain of the sanitary fitting;
- a temperature sensor mounted on the mouth of the electrovalve;
- a control unit connected to said electrovalve and said temperature sensor;
- a by-pass pipe along which said electrovalve is mounted.

Said control unit comprises a microprocessor and a memory.

According to a preferred embodiment, said control unit also comprises a pair of photocells for wireless communication between said microprocessor provided in flow device of the invention and an external computer likewise provided with a pair of photocells.

The operating data of the flow device are is set on the computer and sent to the microprocessor of the flow device, such as: identification code of computer entering data or making program changes, current date and time, fluxing starting time, fluxing time, fluxing frequency expressed in days, threshold temperature value of hot water sent to the drain, maximum time in which hot water sent to the drain must exceed the set threshold value.

It must be noted that a measured time higher than a predefined value indicates that an anomaly has occurred in the installation, and the microprocessor generates an alarm or anomaly signal. Through the computer it is also possible to open or close the electrovalve for testing purposes.

Of course, the data contained in the memory of the control unit of the flow device can be transferred to the external computer, such as: date and time in flow device, settings, identification code of computer used to enter data or make program changes with event date and time, fluxing operations made and time when the temperature threshold value of the water has been reached. For explanatory reasons, the description of the flow device of the invention continues with reference to attached drawings, which only have illustrative, not limiting value, wherein:
- Fig. 1 is a view of the main constructive parts of the flow device according to the invention;
- Fig. 2 is a view of the flow device according to the invention installed in the hot water inlet pipe of a shower;
- Fig. 3 is a view of the flow device according to the invention installed in the hot water inlet pipe of a sink provided with traditional faucet;
- Fig. 4 is a view of the flow device according to the invention installed on the hot water inlet pipe of a sink provided with a special mixer faucet, incorporating a bypass pipe of mixer faucet and closing element.

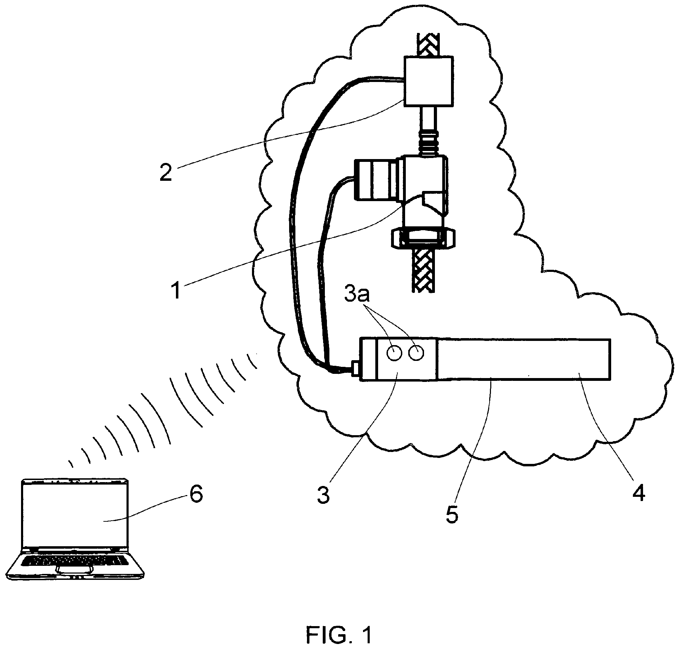

Referring to Fig. 1 the flow device of the invention comprises:
- an electrovalve (1); .
- a temperature sensor (2) mounted on the mouth of the electrovalve (1);
- a control unit (3) comprising a microprocessor and a battery (4) to power the control unit (3);
- a box (5) used to house and protect said control unit (3) and battery (4).
- a by-pass pipe along which said electrovalve (1) is mounted. Said control unit (3) is connected to electrovalve (1) and sensor (2).

Said control unit (3) also comprises connection means adapted to provide connection and communication between said microprocessor and an external computer (6).

According to a preferred embodiment, said control unit (3) comprises a pair of photocells (3a) for wireless communication between said microprocessor and said computer (6) likewise provided with a pair of photocells.

The opening and closing of the electrovalve is automatically actuated by the microprocessor, according to the cyclic sanitization program set on said microprocessor.

Loading and changes of sanitization program are carried out by means of the external computer (6), where said program is loaded and then transferred to said microprocessor of control unit (3).

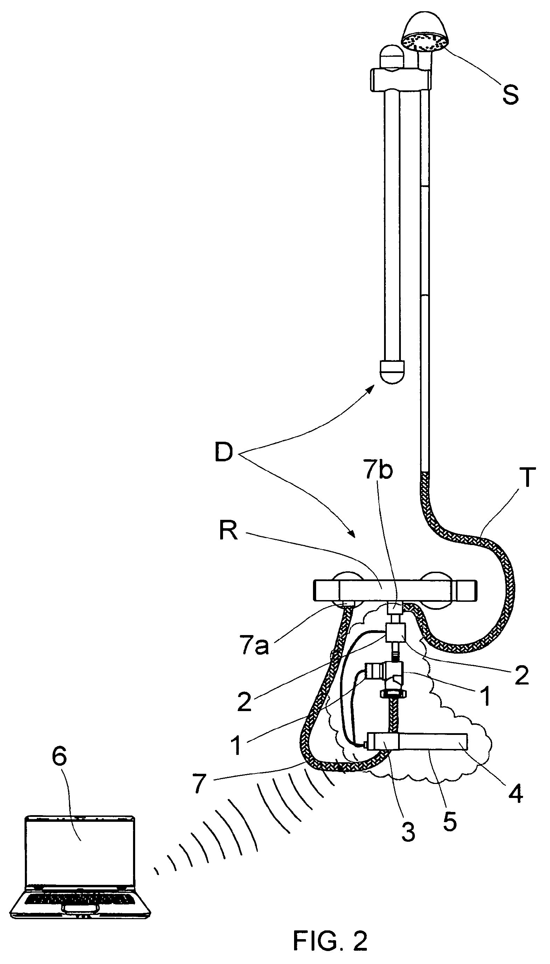

Fig. 2 shows the flow device of the invention installed in a shower (D).

In such an application the electrovalve (1) is mounted along a by-pass pipe (7) branching off from a two-way inlet fitting (7a) and ending with an outlet fitting (7b).

The two-way inlet fitting (7a) is coupled on the nozzle delivering hot water into the faucet (R) of the shower, whereas the outlet fitting (7b) is coupled on the nozzle delivering water from faucet (R).

Said electrovalve (1) is normally closed, so that said by-pass pipe (7) never receives water during the normal use of the shower.

Said electrovalve (1) is automatically opened, upon command from microprocessor, only when the sanitization cycle must be carried out, during which the faucet (R) is generally closed.

During the sanitization cycle water with sanitizer - introduced in the water system - passes through the branch pipe, reaches the by-pass pipe (7) and is poured into the delivery pipe (T) of the shower head (S) until it flows out from the latter, with consequent sanitization of branch line, pipe (T) and shower head (S).

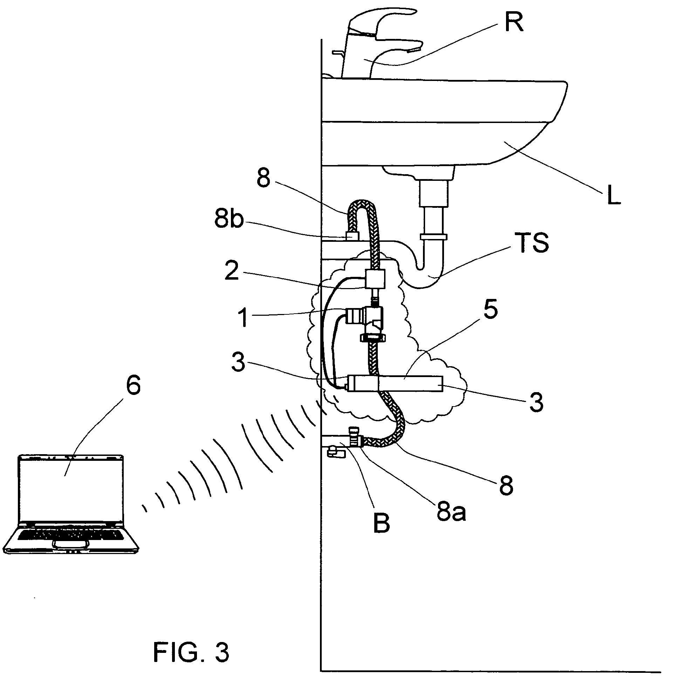

Fig. 3 is a view of the flow device of the invention installed on a sink (L) provided with ordinary faucet (R).

In such an application the electrovalve (1) is mounted along a by-pass pipe (8) branching off from a two-way inlet fitting (8a) and ending with an outlet fitting (8b).

The two-way inlet fitting (8a) is coupled into the nozzle for connection to the hot water system, normally situated on the wall under the sink, whereas the outlet fitting (8b) is coupled on the drain pipe (TS) of the sink.

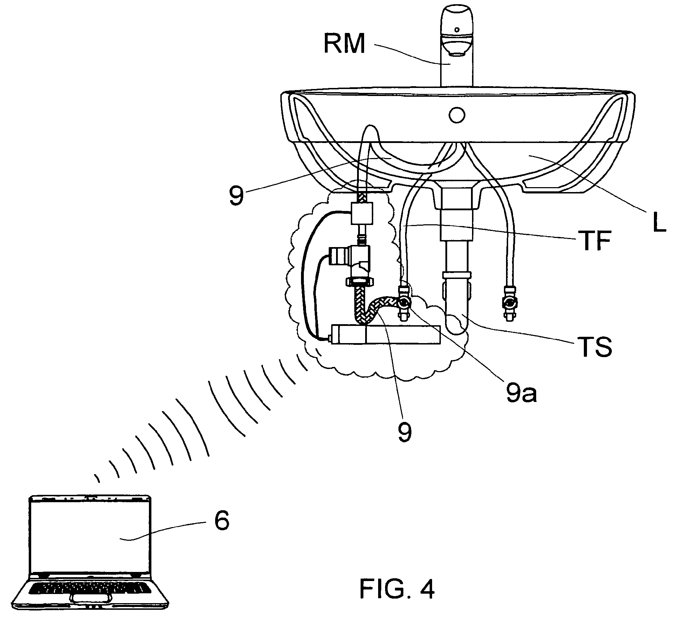

Said electrovalve (1) is normally closed, so that said by-pass pipe (8) never receives water during normal use of the sink; in fact. hot water is diverted by said two-way fitting (8a) into the traditional hose (TF) (shown in Fig. 4) feeding the faucet (R).

Said electrovalve (1) is automatically opened, upon command from the microprocessor, only when a sanitization cycle must be carried out, during which the faucet (R) is generally closed.

During the sanitization cycle water with sanitizer - introduced in the water system - passes through the branch pipe, reaches the by-pass pipe (8) and is poured into the drain pipe (TS) with consequent sanitization of the entire branch line, sometimes several meters long, which branches off from the main line of the water system and ends with said connection nozzle (B).

Fig. 4 is a view of the flow device of the invention installed in a sink (L) provided with a special mixer faucet (RM) (not falling within the scope of the present invention), which incorporates a by-pass pipe of mixer faucet and closing element.

In such an application the electrovalve (1) is mounted along a by-pass pipe (9) branching off from a two-way inlet coupling (9a) and entering said by-pass pipe of mixer faucet and closing element.

The two-way inlet fitting (9a) is inserted into the nozzle (B) (shown in Fig. 3) for connection to hot water system, normally situated on the wall under the sink.

Said electrovalve (1) is normally closed, so that said by-pass pipe (9) never receives water during normal use of the sink; in fact. hot water is diverted by said two-way fitting (9a) into the traditional hose (TF) feeding the mixer faucet (RM).

Said electrovalve (1) is automatically opened, upon command from microprocessor, only when the sanitization cycle must be carried out, during which the mixer faucet (RM) is generally closed.

During the sanitization cycle water with sanitizer - introduced in the water system - passes through the branch pipe, reaches the by-pass pipe (9) and is poured into the mixer faucet (RM) through said by-pass pipe of mixer faucet and closing element, with consequent sanitization of branch pipe and mixer faucet (RM).

In view of the above, it appears evident that, because of the presence of the flow device of the invention, multiple sanitization cycles can be carried out automatically, without a specialized operator, who will inspect the site only to change the sanitization program or download data of each sanitization cycle from the memory of the control unit between inspections.

## Claims

1. Domestic water systems comprising:
- a main line of hot water,
- an auxiliary recirculation line generating with the main line a loop system wherein a sanitizing chemical agent is inserted for "anti-legionnaires' disease" sanitization,
- a pump for pushing the sanitizing chemical agent into the loop system,
- a plurality of terminal apparatuses for water delivering connected by branch lines to said loop system,
**characterized in that** it comprises:
- a flow device located in at least one of said branch lines of the terminal apparatuses; said flow device comprising:
- a control unit (3) comprising a memory and a microprocessor that contains a program of sanitization cycles,
- an electrovalve (1) connected to said control unit (3), said electrovalve (1) is open, during the sanitization cycle, so that the water contained into the branch line of the terminal apparatus is delivered toward the discharge, and
- a by-pass pipe (7, 8, 9) along which said electrovalve (1) is mounted, so that the sanitizing agent can circulate into the branch line and the terminal apparatus.

2. Domestic water systems as claimed in the preceding claim, **characterized in that** it comprises a temperature sensor (2) connected to said control unit (3) and mounted on a mouth of the electrovalve (1).

3. Domestic water systems as claimed in any one of the preceding claims, **characterized in that** said control unit (3) comprises connection means (3a) that allow for connecting and putting into communication said microprocessor with an external computer (6).

4. Domestic water systems as claimed in the preceding claim, **characterized in that** said connection means (3a) are a pair of photocells, or Wi-Fi or Bluetooth device, which allows for wireless communication between said microprocessor and said computer (6).

5. Domestic water systems as claimed in one or more of the preceding claims, **characterized in that** it comprises a battery (4) to power the control unit (3) and a box (5) to house and protect said control unit (3) and battery (5).

## Patentansprüche

1. Brauchwassersystem umfassend:
- eine Warmwasser-Hauptleitung;
- eine Hilfsrückführleitung, die zusammen mit der Hauptleitung ein Kreissystem bildet, in das ein chemisches Desinfektionsmittel zur Legionellen-Entkeimung gegeben wird,
- eine Pumpe, um das chemische Desinfektionsmittel in das Kreissystem einzuschleusen,
- mehrere Endgeräte der Brauchwassersysteme, die über Abzweigleitungen an das Kreissystem angeschlossen sind,
**dadurch gekennzeichnet, dass** es Folgendes umfasst:
- eine Durchflusseinrichtung, die in mindestens einer der Abzweigleitungen der Endgeräte angeordnet ist; wobei die Durchflusseinrichtung Folgendes umfasst:
- eine Steuereinheit (3), umfassend einen Datenspeicher und einen Mikroprozessor, der ein Programm für die Desinfektionszyklen enthält;
- ein Magnetventil (1), das an die Steuereinheit (3) angeschlossen ist, wobei das Magnetventil (1) während des Desinfektionszyklus offen ist, so dass das in der Abzweigleitung der Endgeräte enthaltene Wasser zum Abfluss geleitet wird, und
- ein Umleitungsrohr (7, 8, 9), längs welchem das Magnetventil (1) montiert ist, so dass das Desinfektionsmittel in der Abzweigleitung und in den Endgeräten zirkulieren kann.

2. Brauchwassersystem nach dem vorstehenden Anspruch, **dadurch gekennzeichnet, dass** es einen Temperaturfühler (2) umfasst, der an die Steuereinheit (3) angeschlossen und an einer Auslassöffnung des Magnetventils (1) angebracht ist.

3. Brauchwassersystem nach einem der vorstehenden Ansprüche, **dadurch gekennzeichnet, dass** die Steuereinheit (3) Verbindungsmittel (3a) umfasst, die es ermöglichen, den Mikroprozessor an einen externen Computer (6) anzuschließen und in Kommunikationsverbindung zu versetzen.

4. Brauchwassersystem nach dem vorstehenden Anspruch, **dadurch gekennzeichnet, dass** die Verbindungsmittel (3a) ein Paar von Fotozellen oder eine Wi-Fi- bzw. Bluetooth-Einrichtung sind, die eine drahtlose Kommunikation mit dem Mikroprozessor und dem Computer (6) ermöglichen.

5. Brauchwassersystem nach einem oder mehreren der vorstehenden Ansprüche, **dadurch gekennzeichnet, dass** es eine Batterie (4) zur Speisung der Steuereinheit (3) und ein Gehäuse (5) zur Aufnahme und zum Schutz der Steuereinheit (3) und der Batterie (5) umfasst.

## Revendications

1. Installation hydrique domestique comprenant :
- une ligne principale d'eau chaude ;
- une ligne auxiliaire de recyclage qui génère, avec la ligne principale, un système à anneau où un agent chimique désinfectant est introduit pour la désinfection « anti-légionnelle »,
- une pompe pour pousser l'agent chimique désinfectant dans le système à anneau,
- une pluralité d'appareils terminaux pour la fourniture d'eau connectés moyennant des lignes de dérivation au dit système à anneau,
**caractérisée en ce qu'**elle comprend :
- un dispositif de débit positionné dans au moins l'une des dites lignes de dérivation des appareils terminaux ; ledit dispositif de débit comprenant :
- un module électronique (3) comprenant une mémoire et un micro-processeur qui contient un programme des cycles de désinfection ;
- une électrovanne (1) connectée au dit module électronique (3), ladite électrovanne (1) est ouverte, pendant le cycle de désinfection, de manière à ce que l'eau contenue dans la ligne de dérivation des appareils terminaux est envoyée vers le vidage, et
- un tuyau de by-pass (7, 8, 9) le long duquel ladite électrovanne (1) est montée, de manière à ce que l'agent désinfectant puisse circuler dans la ligne de dérivation et dans les appareils terminaux.

2. Installation hydrique domestique selon la revendication précédente, **caractérisée en ce qu'**elle comprend un capteur de température (2) branché au dit module électronique (3) et monté sr un goulot de sortie de ladite électrovanne (1).

3. Installation hydrique domestique selon l'une des revendications précédentes, **caractérisée en ce que** ledit module électronique (3) comprend des moyens de connexion (3a) qui permettent de brancher et faire communiquer ledit micro-processeur avec un ordinateur externe (6).

4. Installation hydrique domestique selon la revendication précédente, **caractérisée en ce que** lesdits moyens de connexion (3a) sont une paire de photocellules, ou dispositif wi-fi ou bluetooth, qui permet une communication sans fil entre ledit micro-processeur et ledit ordinateur (6).

5. Installation hydrique domestique selon l'une des revendications précédentes, **caractérisée en ce qu'**elle comprend une batterie (4) pour l'alimentation du module électronique (3) et un boîtier (5) de logement et protection du dit module électronique (3) et de la batterie (5).
